# EUROPEAN PATENT APPLICATION

(11) **EP 4 790 552 A1**
(43) Date of publication of application: **12.08.2026**
(21) Application number: 26155773.0
(22) Date of filing: 02.02.2026
(51) Int. Cl.: G06F 8/72, G06N 5/04

(54) **METHOD AND SYSTEM FOR IDENTIFYING DOMAIN ALIGNED MICROSERVICES IN ENTERPRISE APPLICATIONS**

(30) Priority: 06.02.2025 IN 202521009862
(71) Applicant: Tata Consultancy Services Limited, Maharashtra (IN)
(72) Inventor: MEDICHERLA, Raveendra Kumar, 560066 Bengaluru, Karnataka (IN); GANDHI, Jay Nandan, 411057 Pune, Maharashtra (IN); NAIK, Ravindra Dinkar, 411057 Pune, Maharashtra (IN); SHARMA, Dipesh, 560066 Bengaluru, Karnataka (IN)
(74) Representative: Goddar, Heinz J.

(57) **Abstract**

Existing microservices identification techniques focused on clustering the cohesive components of the applications, ignoring their alignment to the business domain that they service. The present disclosure analyzes a plurality of inputs and generates a plurality of outputs based on the analysis. A plurality of application elements and one or more associated relations of different types between the plurality of application elements is created using the generated plurality of outputs. A filtered set of application elements and the associated relations of different types between the set of application elements are enriched. An application architecture model is created using an enriched set of application elements and an architecture meta model. A weighted graph is created using the application architecture model and a domain description map. One or more communities specific to the created weighted graph are grouped and evaluated. One or more candidate microservices are identified based on the evaluation.

## Description

### CROSS-REFERENCE TO RELATED APPLICATIONS AND PRIORITY

The present application claims priority to Indian application no. 202521009862, filed on February 6, 2025.

### TECHNICAL FIELD

The disclosure herein generally relates to microservices identification, and, more particularly, to a method and system for identifying domain aligned microservices in enterprise applications.

### BACKGROUND

Today's digital enterprises require their applications to be nimble, fault resilient to bursting workloads, and cheaper to operate and maintain. However, the architecture of many legacy business applications is largely monolithic. In these applications, multiple business functionality and technical concerns such as exception handling, transaction management, resource management and monitoring code are interleaved. To achieve the digital goals of an enterprise such as Enterprise Performance and Value Creation, organizations want to refactor their monolithic applications into microservices architecture that aligns with their business domain and deploy them on a suitable cloud architecture. This process is usually referred to as Application modernization. The Application Modernization Services is a multi-billion market, and it is expected to grow at the Compounded Annual Growth Rate (CAGR) of 14.8% from 2024 to 2029.

A monolithic architecture is usually a single-process architecture where components implementing multiple business functionalities across user interface layer, business logic layer, and data storage layer are deployed together. Multiple instances of this process can be used for scaling, but the interdependence between the components leading to tight coupling, thus making it very difficult to create workload balancing and distributed deployment. While development and deployment of monolithic applications is relatively easy, they are hard and expensive to change, maintain, and scale, incurring the potential for single point of failure.

A microservices architecture is an architectural pattern, which is a collection of loosely coupled, independently deployed services, each of which is modeled around a singly responsible, well-defined business functionality. Each microservice can be independently instantiated, facilitating horizontal scalability to accommodate fluctuating demand. In the event of failures, a microservice can be instantly re-instantiated, without affecting the working of other parts of the system. It is technologically agnostic, can be tested, monitored and changed individually. The intercommunication can be implemented using lightweight communication protocols, which enables them to be deployed on distributed infrastructure, making them well suited for cloud environments.

A significant portion of critical data intensive domains such as banking, retail, and telecommunication heavily rely on legacy monolithic applications. To quickly reap the benefits of digital organization, many organizations are taking lift and shift approach to deploy their monolithic application on cloud environments, with minimal or no refactoring. While this may provide initial cost benefits, it limits them to take full advantage of cloud benefits such as observability, horizontal scaling at component level and many others.

### SUMMARY

Embodiments of the present disclosure present technological improvements as solutions to one or more of the above-mentioned technical problems recognized by the inventors in conventional systems. For example, in one embodiment, a method for identifying domain aligned microservices in enterprise applications is provided. The method includes receiving, via one or more hardware processors, a plurality of inputs specific to an enterprise application from an application repository; analyzing, via the one or more hardware processors, the received plurality of inputs using a static source code analyzer; generating, via the one or more hardware processors, a plurality of outputs based on the analysis; creating, via the one or more hardware processors, a plurality of application elements and one or more associated relations of different types between the plurality of application elements using the generated plurality of outputs; filtering, via the one or more hardware processors, the created plurality of application elements and the associated relations of different types between the plurality of application elements to obtain a filtered set of application elements and the associated relations of different types between the set of application elements; enriching, via the one or more hardware processors, the filtered set of application elements and the associated relations of different types between the set of application elements using the received plurality of inputs; creating, via the one or more hardware processors, an application architecture model using (i) the enriched set of application elements and the associated relations of different types between the enriched set of application elements, and (ii) a pre-created architecture meta model; creating, via the one or more hardware processors, a domain description map to establish a relationship between a domain model and the application architecture model using the following steps: creating one or more program summaries using the received plurality of inputs specific to the enterprise application, by prompting one or more Large Language Models (LLM) with the domain model as a context; creating a vector form of a program representation associated with each of the corresponding created one or more program summaries; creating a vector form of a domain model representation associated with each of one or more inputs from the domain model; and creating the domain description map by matching the vector form of the program representation and the vector form of the domain model representation using one or more pre-defined similarity methods; creating, via the one or more hardware processors, a weighted graph using the application architecture model and the domain description map, wherein one or more nodes comprised in the weighted graph represent one or more atomic entities comprised in the application architecture model represented by the created vector form of the domain model representation obtained by looking into the domain description map, and wherein one or more edges comprised in the weighted graph represent a dependency relationship among the one or more atomic entities, and weight of each edge is computed using a pre-defined calculation based on a relationship type; grouping, via the one or more hardware processors, by an aggregator, one or more communities specific to the created weighted graph using one or more pre-defined clustering techniques; evaluating, via the one or more hardware processors, the grouped one or more communities using a set of pre-defined one or more architectural metrics; identifying, via the one or more hardware processors, the evaluated one or more communities as one or more candidate microservices based on the evaluation; and generating, via the one or more hardware processors, one or more names for each of the identified one or more candidate microservices by prompting the one or more Large Language Models (LLM) with the one or more atomic entities of the identified one or more candidate microservices as a context.

In another aspect, there is provided a system for identifying domain aligned microservices in enterprise applications. The system comprises: a memory storing instructions; one or more communication interfaces; and one or more hardware processors coupled to the memory via the one or more communication interfaces, wherein the one or more hardware processors are configured by the instructions to: receive a plurality of inputs specific to an enterprise application from an application repository. The system further includes analyzing the received plurality of inputs using a static source code analyzer; generating a plurality of outputs based on the analysis; creating a plurality of application elements and one or more associated relations of different types between the plurality of application elements using the generated plurality of outputs; filtering the created plurality of application elements and the associated relations of different types between the plurality of application elements to obtain a filtered set of application elements and the associated relations of different types between the set of application elements; enriching the filtered set of application elements and the associated relations of different types between the set of application elements using the received plurality of inputs; creating an application architecture model using (i) the enriched set of application elements and the associated relations of different types between the enriched set of application elements, and (ii) a pre-created architecture meta model; creating a domain description map to a relationship between a domain model and the application architecture model using the following steps: creating one or more program summaries using the received plurality of inputs specific to the enterprise application, by prompting one or more Large Language Models (LLM) with the domain model as a context; creating a vector form of a program representation associated with each of the corresponding created one or more program summaries; creating a vector form of a domain model representation associated with each of one or more inputs from the domain model; and creating the domain description map by matching the vector form of the program representation and the vector form of the domain model representation using one or more pre-defined similarity methods; creating a weighted graph using the application architecture model and the domain description map, wherein one or more nodes comprised in the weighted graph represent one or more atomic entities comprised in the application architecture model represented by the created vector form of the domain model representation obtained by looking into the domain description map, and wherein one or more edges comprised in the weighted graph represent a dependency relationship among the one or more atomic entities, and weight of each edge is computed using a pre-defined calculation based on a relationship type; grouping, by an aggregator, one or more communities specific to the created weighted graph using one or more pre-defined clustering techniques; evaluating the grouped one or more communities using a set of pre-defined one or more architectural metrics; identifying the evaluated one or more communities as one or more candidate microservices based on the evaluation; and generating one or more names for each of the identified one or more candidate microservices by prompting the one or more Large Language Models (LLM) with the one or more atomic entities of the identified one or more candidate microservices as a context.

In yet another aspect, there are provided one or more non-transitory machine-readable information storage mediums comprising one or more instructions which when executed by one or more hardware processors cause receiving a plurality of inputs specific to an enterprise application from an application repository; analyzing the received plurality of inputs using a static source code analyzer; generating a plurality of outputs based on the analysis; creating a plurality of application elements and one or more associated relations of different types between the plurality of application elements using the generated plurality of outputs; filtering the created plurality of application elements and the associated relations of different types between the plurality of application elements to obtain a filtered set of application elements and the associated relations of different types between the set of application elements; enriching the filtered set of application elements and the associated relations of different types between the set of application elements using the received plurality of inputs; creating an application architecture model using (i) the enriched set of application elements and the associated relations of different types between the enriched set of application elements, and (ii) a pre-created architecture meta model; creating a domain description map to a relationship between a domain model and the application architecture model using the following steps: creating one or more program summaries using the received plurality of inputs specific to the enterprise application, by prompting one or more Large Language Models (LLM) with the domain model as a context; creating a vector form of a program representation associated with each of the corresponding created one or more program summaries; creating a vector form of a domain model representation associated with each of one or more inputs from the domain model; and creating the domain description map by matching the vector form of the program representation and the vector form of the domain model representation using one or more pre-defined similarity methods; creating a weighted graph using the application architecture model and the domain description map, wherein one or more nodes comprised in the weighted graph represent one or more atomic entities comprised in the application architecture model represented by the created vector form of the domain model representation obtained by looking into the domain description map, and wherein one or more edges comprised in the weighted graph represent a dependency relationship among the one or more atomic entities, and weight of each edge is computed using a pre-defined calculation based on a relationship type; grouping, by an aggregator, one or more communities specific to the created weighted graph using one or more pre-defined clustering techniques; evaluating the grouped one or more communities using a set of pre-defined one or more architectural metrics; identifying the evaluated one or more communities as one or more candidate microservices based on the evaluation; and generating one or more names for each of the identified one or more candidate microservices by prompting the one or more Large Language Models (LLM) with the one or more atomic entities of the identified one or more candidate microservices as a context.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for identifying domain aligned microservices in enterprise applications, according to some embodiments of the present disclosure.
FIG. 2 is a functional block diagram of the system for identifying domain aligned microservices in enterprise applications, according to some embodiments of the present disclosure.
FIGS. 3A through 3C are flow diagrams illustrating the steps involved in the method for identifying domain aligned microservices in enterprise applications, according to some embodiments of the present disclosure.
FIGS. 4A and 4B illustrate a use case example in conjunction with the method for identifying domain aligned microservices in enterprise applications, according to some embodiments of the present disclosure.
FIG. 5 shows an Architecture Meta Model (AMM) in conjunction with the method for identifying domain aligned microservices in enterprise applications, according to some embodiments of the present disclosure.
FIGS. 6A through 6D illustrates quality metrics for the benchmark applications including a CARGO (Context-sensitive Label Propagation), a MAGNET (Method-based Approach using Graph Neural Network for Microservices), a ServiceMate and a GNN (Graph Neural Network) based tool in conjunction with the method for identifying domain aligned microservices in enterprise applications, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Refactoring a monolith into microservices architecture is a hard task. A key and challenging step in the process of refactoring is the identification of microservices. In practice, an expert architect carefully identifies microservices that align with business functionality by employing the best patterns and practices (as known in the art). Such a manual identification of candidate microservices is a challenging, time consuming, expensive task. On the other hand, there is a large body of active research to automatically identify the microservices in a monolithic application (as known in the art). The state-of-the-art (SOTA) techniques recover architecture (or low-level design) from the existing monolithic application, analyses the dependencies between the components and cluster them into partitions based on cohesive components in a partition and loose coupling between the partitions. Each cluster is recommended as a candidate microservice.

Some of the existing techniques have a few shortcomings which are described below. First, the candidates recommended by some of the existing techniques are not well aligned to the underlying business domain. Unrelated business operations are clustered together. Second, the number of microservices identified by the automated techniques (few of the existing know techniques) are much higher than the number of microservices recommended by the expert architects. Third, the sizes of the candidate microservices are highly skewed - there are a few large size candidates ("god partitions") and many small size candidates. The key insight by the present disclosure is that the majority of current/conventional approaches focus on grouping technically cohesive components as microservices instead of functionality cohesive components that implement a service domain task.

The problem of microservices identification in a monolith is ongoing research. Several techniques have been proposed in literature, and these are based on architectural recovery and clustering to recommend candidate microservices (known in the art). These techniques can be broadly classified into static analysis based (known in the art), dynamic analysis based (known in the art), and optimization techniques (known in the art).

One of the existing works proposed a ServiceCutter tool (known in the art) that uses coupling criteria based decomposition approach. It takes coupling information in an Entity-Relationship (ER) model as input and forms an undirected weighted graph, and clusters the undirected weighted graph using an unsupervised clustering algorithm. However, this approach does not implement architectural recovery and domain alignment steps.

Another existing work performed context-sensitive static code analysis and decomposition using label propagation algorithm (LPA) to optimize code-modularity and database transaction purity.

Another existing work used static and semantic analysis of source code and built feature-rich dependency graph based on application call graph and word embeddings of method names of a JAVA^{®} application. This approach assumed that method is named correctly and treated all type of dependencies equally, so the semantic analysis is still technical. They formulated a Graph Neural Network (GNN), generated clusters using Deep Modularity networks (DMoN) architecture (known in the art), and further evaluated each cluster against a set of quality metrics to recommend optimal candidate microservices.

The above techniques processed method call graph alone, ignoring the importance of class and attribute level dependencies and domain to which these applications are servicing. The ServiceCutter tool made provisions to take predefined services and use cases as input, but the manual effort makes it difficult to use it by industry architects.

The present disclosure addresses the above mentioned issues by identifying domain aligned microservices in enterprise applications. The present disclosure analyzes a plurality of inputs using a static source code analyzer and generates a plurality of outputs based on the analysis. Further a plurality of application elements and one or more associated relations of different types between the plurality of application elements are created using the generated plurality of outputs. The created plurality of application elements and the associated relations of different types between the plurality of application elements are filtered to obtain a filtered set of application elements and the associated relations of different types between the set of application elements. Furthermore, the filtered set of application elements and the associated relations of different types between the set of application elements is enriched using the received plurality of inputs. Further, the present disclosure creates an application architecture model using (i) the enriched set of application elements and the associated relations of different types between the enriched set of application elements, and (ii) a pre-created architecture meta model. Furthermore, the present disclosure creates a domain description map by matching a vector form of a program representation and a vector form of a domain model representation using one or more pre-defined similarity methods. Furthermore, the present disclosure creates a weighted graph using the application architecture model and the domain description map, wherein one or more nodes comprised in the weighted graph represent one or more atomic entities comprised in the application architecture model represented by the created vector form of the domain model representation obtained by looking into the domain description map, and wherein one or more edges comprised in the weighted graph represent a dependency relationship among the one or more atomic entities, and weight of each edge is computed using a pre-defined calculation based on a relationship type. Further, the present disclosure groups one or more communities specific to the created weighted graph using one or more pre-defined clustering techniques. Furthermore, the grouped one or more communities are evaluated using a set of pre-defined one or more architectural metrics. Furthermore, the evaluated one or more communities are identified as one or more candidate microservices based on the evaluation.

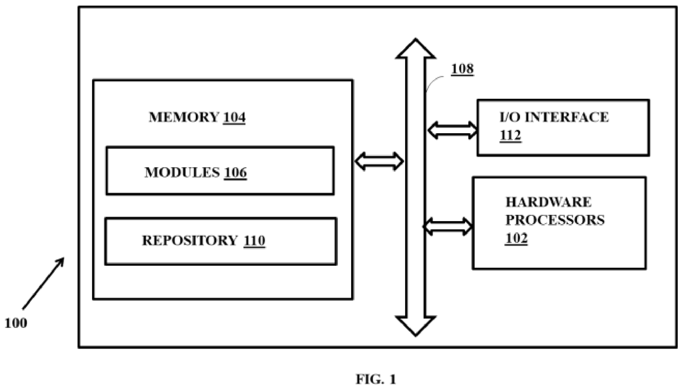

Referring now to the drawings, and more particularly to FIGS. 1 through 6D, where similar reference characters denote corresponding features consistently throughout the figures, there are shown preferred embodiments, and these embodiments are described in the context of the following exemplary system and/or method.

FIG. 1 illustrates an exemplary system 100 for identifying domain aligned microservices in enterprise applications, according to some embodiments of the present disclosure. In an embodiment, the system 100 includes or is otherwise in communication with hardware processors 102, at least one memory such as a memory 104, and an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For this purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106. The memory 104 also includes a data repository (or repository) 110 for storing data processed, received, and generated by the plurality of modules 106.

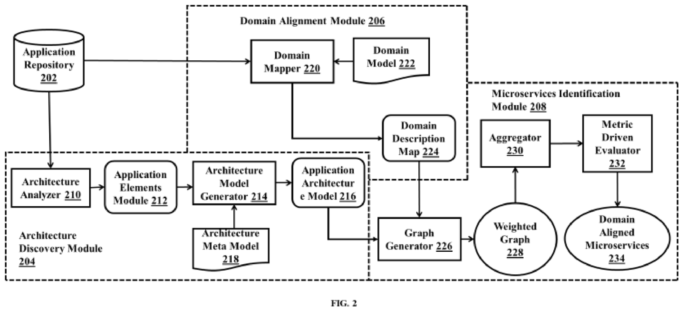

The plurality of modules 106 includes programs or coded instructions that supplement applications or functions performed by the system 100 for identifying domain aligned microservices in enterprise applications. The plurality of modules 106, amongst other things, can include routines, programs, objects, components, and data structures, which perform particular tasks or implement particular abstract data types. The plurality of modules 106 may also be used as signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for identifying domain aligned microservices in enterprise applications. In an embodiment, the modules 106 include an application repository 202, an architecture discovery module 204, a domain alignment module 206, and a microservices identification module 208. The architecture discovery module 204 comprises an architecture analyzer 210, an application elements module 212, an architecture model generator 214, an application architecture model 216, and an architecture meta model 218. The domain alignment module 206 comprises a domain mapper 220, a domain model 222 and a domain description map 224. The microservices identification module 208 comprises a graph generator 226, a weighted graph 228, an aggregator 230, a metric driven evaluator 232 and a domain aligned microservices 234. The modules are depicted in FIG. 2. These modules that are depicted in FIG. 2 are implemented as at least one of a logically self-contained part of a software program, a self-contained hardware component, and/or a self-contained hardware component with a logically self-contained part of a software program embedded into each of the hardware component that when executed perform the above method described herein, in one embodiment of the present disclosure.

The data repository (or repository) 110 may include a plurality of abstracted pieces of code for refinement and data that is processed, received, or generated as a result of the execution of the module(s) 106.

Although the data repository 110 is shown internal to the system 100, it will be noted that, in alternate embodiments, the data repository 110 can also be implemented externally to the system 100. The data contained within such an external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS).

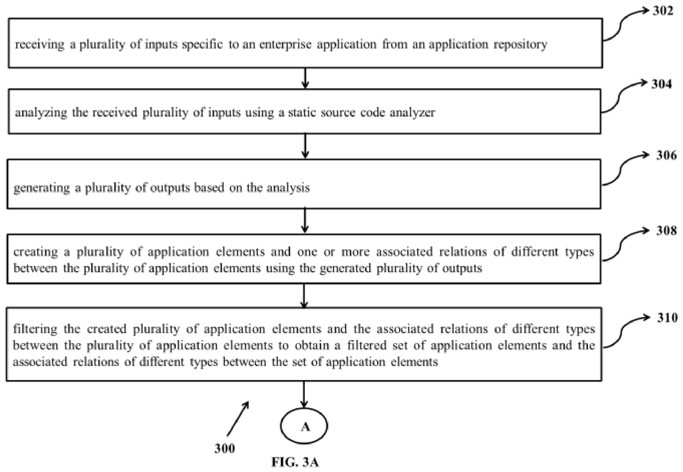

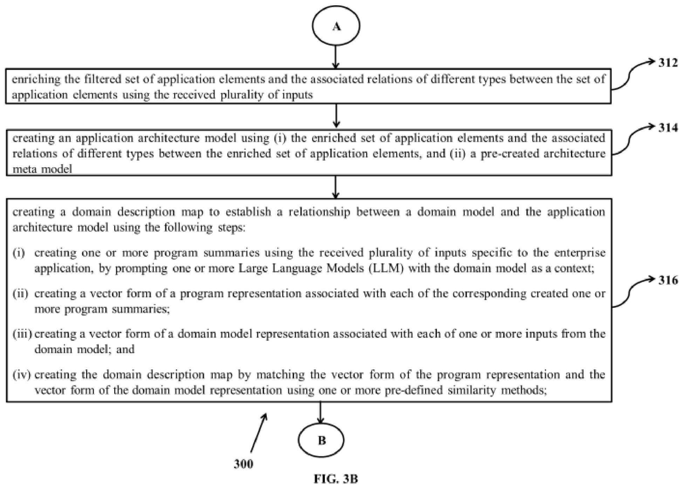

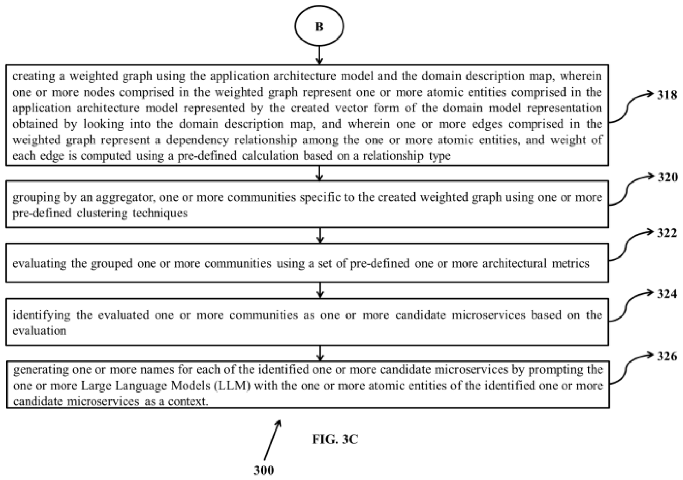

FIGS. 3A through 3C are flow diagrams illustrating a method for identifying domain aligned microservices in enterprise applications using the systems 100 of FIGS. 1-2, according to some embodiments of the present disclosure. Steps of the method of FIGS. 3A through 3C shall be described in conjunction with the components of FIG. 2. At step 302 of the method 300, the architecture discovery module 204 executed via the one or more hardware processors 102 receives a plurality of inputs specific to an enterprise application from an application repository 202. The plurality of inputs comprises at least one of a source code, a change history, one or more configuration files, one or more logs, one or more deployment files, or combinations thereof.

At step 304 of the method 300, the architecture analyzer 210 comprised in the architecture discovery module 204 executed via the one or more hardware processors 102 analyzes the received plurality of inputs using a static source code analyzer. The received plurality of inputs is analyzed to parse and create required data structures from the application, which are used in subsequent steps.

At step 306 of the method 300, the one or more hardware processors 102 generates a plurality of outputs based on the analysis. The plurality of outputs comprises at least one of a type hierarchy, an abstract syntax tree and a call graph. The type hierarchy captures the hierarchical relationship between various types of entities in the program. The abstract syntax tree represents a program in tree form where each node in the tree is abstract elements such as statement, expressions and the like. The call graph captures caller and callee relationship between different functions/methods in the programs/classes.

At step 308 of the method 300, the application elements module 212 comprised in the architecture discovery module 204 executed via the one or more hardware processors 102 creates a plurality of application elements and one or more associated relations of different types between the plurality of application elements using the generated plurality of outputs. The plurality of application elements comprises at least one of one or more classes or one or more programs with associated one or more attributes and one or more methods.

At step 310 of the method 300, the one or more hardware processors 102 filters the created plurality of application elements and the associated relations of different types between the plurality of application elements to obtain a filtered set of application elements and the associated relations of different types between the set of application elements. The filtering is performed to remove/filter the set of application elements related to libraries and technical components that are not relevant for microservices and the associated relations of different types between the set of application elements.

At step 312 of the method 300, the one or more hardware processors 102 enriches the filtered set of application elements and the associated relations of different types between the set of application elements using the received plurality of inputs. This step enriches the filtered set of application elements and the associated relations of different types between the set of application elements by creating new relationships between the application elements induced due to non-functional aspects of the application such as performance, change impact, team collaboration etc., using the received plurality of inputs.

At step 314 of the method 300, the architecture model generator 214 comprised in the architecture discovery module 204 executed via the one or more hardware processors 102 creates an application architecture model 216 using (i) the enriched set of application elements and the associated relations of different types between the enriched set of application elements, and (ii) a pre-created architecture meta model (represented by the architecture meta model 218). The pre-created architecture meta model 218 comprises an application, a Named Collection, one or more entities, the one or more atomic entities, a group and a relation. The relation comprises at least one of the relations between the application and the Named Collection or the relation between the application and another application or the relation between the Named Collection and another Named Collection.

Architectural discovery is a process of analyzing and extracting the architectural information from the application. However, the applications are pervasive in terms of programming languages and frameworks that they use. Also, applications drastically differ in the architectural patterns that they use. To address these challenges, the present disclosure has abstracted minimal application elements that are key for identifying the microservices in the application. In the present disclosure, entities that represent application architectural elements and various relationships between them are identified. These relationships capture the dependencies between the application elements. To represent various entities and their dependency relationships, a common format is defined in the form of the Architecture Meta Model (AMM).

Every application has one or more Named Collections which are a collection of Atomic Entities. An entity is a kind of Named Collection which has different types of dependency relations. Atomic entities represent fields of a class or methods in a class. Atomic entities can be grouped as an entity or grouped based on different grouping criterion like change history, access groups, etc. The Architectural discovery component (architecture discovery module 204 ) has the following steps.
1. Architecture Extraction: This step is programming language dependent. A static source code analyzer (represented by the architecture analyzer 210) is used to analyze a monolithic application, to identify the plurality of application elements and relations between the plurality of application elements. The element could be a data element (attribute) or an operation (method), which is a member of class (or program). Each relation is due to class-to-member or class-to-class relationships such as inheritance, composition and aggregation.
2. Architecture Model Creation: In this step, the identified plurality of application elements and dependency relations are post processed. In this step the system, library, utility or test code is filtered out and only the part of the code that implements application functionality is considered. This filtering is parameterized for the analyst to additionally choose the portions of the code to be removed from consideration. The extracted plurality of application elements and relations are mapped to the components of the architecture meta model 218 (AMM) and the application architecture model 216 (AM) is instantiated that conforms to the architecture meta model 218 (AMM). An architect can manually define a specific type of grouping of the one or more atomic entities and add to the application architecture model 216 (AM). The extracted application architecture model 216 is a representation of monolithic application's architecture.

At step 316 of the method 300, the domain mapper 220, the domain model 222 and the domain description map 224 comprised in the domain alignment module 206 executed via the one or more hardware processors 102 create a domain description map using the following steps. One or more program summaries are created using the received plurality of inputs specific to the enterprise application and by prompting one or more Large Language Models (LLM) with the domain model 222 as a context. A vector form of a program representation associated with the each of the corresponding plurality of program summaries is created. A vector form of a domain model representation associated with the each of one or more inputs from the domain model 222 is created. The domain description map 224 is created by matching the vector form of the program representation and the vector form of the domain model representation using one or more pre-defined similarity methods. The one or more inputs of the domain model 222 comprise one or more domain elements including at least one of one or more domain entities or one or more concepts or one or more terms or one or more facts or one or more relations, a service description, one or more service operations, and one or more use cases.

The domain alignment module 206 embodies a domain-driven technique that uses the domain model 222 as the guiding force for the microservice identification process. The domain model 222 captures the entities, processes, rules and product features that are relevant to a specific business domain expressed in the ubiquitous language understandable to business users or experts in that domain. The domain model 222 is either a publicly available industry reference model like Banking Industry Architecture Network (BIAN) (known in the art) for banking, Association for Cooperative Operations Research and Development (ACORD) (known in the art) for insurance, and Association for Retail Technology Standards (ARTS) (known in the art) for retail, Open digital architecture (ODA) (known in the art) for telecommunication or a suitable domain model that is created as the outcome of an event storming (known in the art) exercise by one or more domain architects.

The Banking Industry Architecture Network (BIAN) (known in the art) is an independent, member owned, not-for-profit association to establish and promote a common architectural framework for enabling banking interoperability. The BIAN's goal is to establish a semantic framework to identify and define IT (Information Technology) services in the banking industry. The BIAN focuses on creating a standard semantic banking services landscape, while ensuring consistent service definitions, levels of detail and boundaries.

The Association for Cooperative Operations Research and Development (ACORD) (known in the art) is a non-profit organization in the insurance industry. The ACORD publishes and maintains an archive of standardized forms. The ACORD has also developed a comprehensive library of electronic data standards with more than 1200 standardized transaction types to support exchange of insurance data between trading partners. ACORD itself, though, is not an insurance company and does not process claims or provide insurance coverage of any kind.

The Association for Retail Technology Standards (ARTS) is an international standards organization dedicated to reducing the costs of technology through standards. ARTS has four standards namely the Standard Relational Data Model, UnifiedPOS, ARTS XML (Extensible Markup Language) and the Standard request for proposal (RFP). The ARTS is a division of the National Retail Federation. These standards enable the rapid implementation of technology within the retail industry by developing standards to ease integration of software applications and hardware devices. ARTS offers testing services to verify that applications accurately incorporate these standards.

The Open digital architecture (ODA) (known in the art) is a standardized cloud-native enterprise architecture blueprint for all elements of the industry from Communication Service Providers (CSPs), through suppliers to system integrators. It accelerates the delivery of next-gen connectivity and beyond - unlocking agility, removing barriers to partnering, and accelerating concept-to-cash.

The objective of the domain alignment module 206 is to create a map between the domain model 222 and the application architecture model 216. The key idea is that the domain model 222 inherently preserves cohesion among the one or more domain elements. The microservices identification module 208 uses this domain cohesiveness to group the plurality of application elements and identify domain-aligned microservices. The inputs to the microservices identification module 208 comprise of the existing monolithic application (from the application repository 202) and the reference domain model 222.

In the present disclosure, business services specification from the industry reference models is considered as the domain model. In the present disclosure, only those application classes that implement application services are considered. These application classes are identified by exploiting the programming paradigms used by the programmer or filtering out using certain class name patterns or application annotations. This enables the identification of candidate application elements for alignment. Then the matching of domain services with identified application elements is performed. There are a few semi-automatic techniques proposed in the literature for this matching (e.g., refer "T. Patil, R. Komondoor, D. D'Souza, and I. Bhattacharya, "An optimization approach for matching textual domain models with existing code," in 2016 IEEE International Conference on Software Maintenance and Evolution (ICSME). IEEE, 2016, pp. 133-143." and refer "R. Komondoor, I. Bhattacharya, D. D'Souza, and S. Kale, "Using relationships for matching textual domain models with existing code," in 2013 20th Working Conference on Reverse Engineering (WCRE). IEEE, 2013, pp. 371-380."). The output of the domain alignment module 206 is the domain description map (DDM) 224.

At step 318 of the method 300, the graph generator 226 and the weighted graph 228 comprised in the microservices identification module 208_executed via the one or more hardware processors 102 creates a weighted graph using the application architecture model and the domain description map. One or more nodes comprised in the weighted graph represent one or more atomic entities comprised in the application architecture model 216 represented by the created vector form of the domain model representation obtained by looking into the domain description map 224. One or more edges comprised in the weighted graph 228 represent a dependency relationship among the one or more atomic entities, and weight of each edge is computed using a pre-defined calculation based on a relationship type.

At step 320 of the method 300, the aggregator 230 comprised in the microservices identification module 208 executed via the one or more hardware processors 102 groups one or more communities specific to the created weighted graph using one or more pre-defined clustering techniques. The one or more pre-defined clustering techniques include Louvain clustering algorithm (known in the art), Deep Modularity networks (DMoN) clustering technique (known in the art) and Markov Clustering algorithm (known in the art). The details of identifying the one or more communities and grouping of the one or more communities are explained in the later sections.

The Louvain clustering algorithm (known in the art) for community detection is a greedy optimization method intended to extract non-overlapping communities from large networks. The Louvain method works by repeating two phases. In phase one, nodes are sorted into communities based on how the modularity of the graph changes when a node moves communities. In phase two, the graph is reinterpreted so that communities are seen as individual nodes.

The Deep Modularity networks (DMoN) (known in the art) (clustering technique (known in the art) is an unsupervised pooling method inspired by the modularity measure of clustering quality.

A discrete uncoupling process for finite spaces is introduced, called the Markov Cluster Process or the MCL process. The process is the engine for the graph clustering algorithm called the Markov Clustering algorithm (known in the art). The MCL process takes a stochastic matrix as input, and then alternates expansion and inflation, each step defining a stochastic matrix in terms of the previous one.

At step 322 of the method 300, the metric driven evaluator 232 comprised in the microservices identification module 208 executed via the one or more hardware processors 102 evaluates the grouped one or more communities using a set of pre-defined architectural metrics. The set of pre-defined architectural metrics include coupling, cohesion, Cyclic (In-)Dependence (CiD), Code Modularity (CMod), Team - Contributors (TC), Lifecycle - Commits (LC), Cohesion at Message Level (CHM) and Cohesion at Domain level (CHD). The details of the set of pre-defined architectural metrics are provided in the later sections.

At step 324 of the method 300, the domain aligned microservices 234 comprised in the microservices identification module 208 executed via the one or more hardware processors 102 identifies the evaluated one or more communities as one or more candidate microservices based on the evaluation. The microservices identification module 208 uses the application architecture model 216 of the architecture discovery module 204 and the domain description map (DDM) 224 created in domain alignment module 206 to identify microservices. It has the following steps.
1. Graph creation: In this step, the weighted graph 228 is created using the elements of the extracted application architecture model 216 and the domain description map (DDM) 224. The one or more nodes in this graph are atomic entities in the application architecture model 216 (AM) and the one or more edges are dependent relationship among the one or more atomic entities. Predefined weights are assigned to each of the one or more edges depending on the relationship type and grouping criterion. The weight can be either positive or negative depending on their nature. Each grouping criterion is assigned a configurable priority which amplifies the predefined weight of each relationship type. The overall weight of an edge is determined by aggregating the weights assigned to that edge. This weighted graph 228 represents the architecture of monolithic application and its domain alignment.
2. Grouping: The weighted graph 228 is partitioned based on the densely connected regions and lightly connected regions to form the one or more communities of the plurality of application elements. Generally, clustering techniques are used for this partitioning. These grouped one or more communities are likely to share similar characteristics, such as high cohesion and low coupling. By leveraging the inherent structure of the weighted graph, these grouped components can be effectively isolated from one another.
3. Metric driven post processing: The goal of this optional post-processing step is to evaluate the one or more communities identified during the grouping step and select the most suitable ones as candidate microservices. The identified one or more communities are examined against the set of well-defined architectural metrics. The set of the one or more communities which perform best in this evaluation is suggested as candidate domain aligned microservices. This evaluation enables a data-driven decision-making process to refine the results. This step is required if multiple sets of clusters, each with a certain ranking, are reported. An expert architect can iteratively refine the candidate microservices based upon his/her expertise to create optimal architecture.

At step 326 of the method 300, the one or more hardware processors 102 generate one or more names for each of the identified one or more candidate microservices by prompting the one or more Large Language Models (LLM) with the one or more atomic entities of the identified one or more candidate microservices as a context. For example, Retail Account Service and Commercial Account Service.

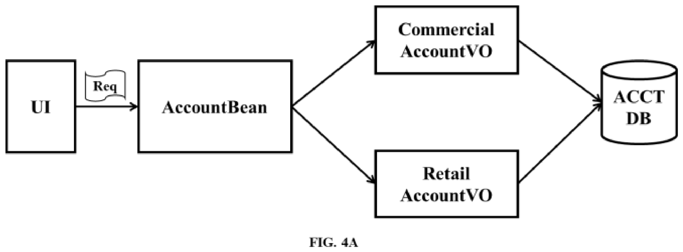

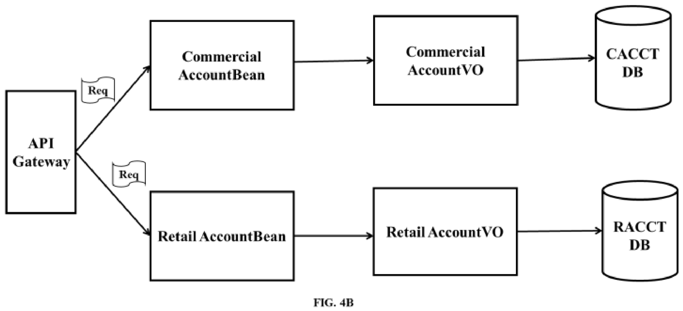

FIGS. 4A and 4B illustrate a use case example in conjunction with the method for identifying domain aligned microservices in enterprise applications, according to some embodiments of the present disclosure. The present disclosure implements a framework that assists architects to identify the right candidate microservices thereby minimizing the effort and cost. The focus is on specifically identifying candidate microservices of an existing monolithic application that are aligned with business services. The method of the present disclosure is based on creating a balance between technical and domain dependencies of the application and inspired by domain driven design approach (known in the art) (For e.g., "E. Evans, Domain-driven design: tackling complexity in the heart of software. Addison-Wesley Professional, 2004."). The domain driven design (known in the art) is a method that prioritizes understanding and modeling the specific problem area where a software system functions. The primary goal of the domain driven design approach is to create software that closely aligns with the business domain, fostering clear communication among all stakeholders and effectively managing system complexity.

The framework of the present disclosure enables the following high-level workflow. In the first step, architecture is recovered from the application in the form of entities and relations that captures various dependencies among the one or more entities and the application architecture model 216 is built. In the second step, the recovered entities in the model are translated to corresponding concepts in a given business domain. In the third step, the approach formulates a graph using the mapped entities and relations and uses unsupervised graph clustering to identify the candidate microservices. In the next step, the one or more communities are post processed, the candidate one or more communities are identified and presented to an expert architect for further processing.

To illustrate the method of the present disclosure at high-level, the present disclosure considers a toy account management module of a core banking application as shown in FIG. 4A. The toy account management module caters to services of two types of accounts, commercial accounts and retail accounts. The account service operations of each type of account are shown in Table I. The business logic for both types of accounts is tightly coupled inside AccountBean class and the Account Database. The approaches that partition architecture based on code dependencies would recommend only one microservice for these two types of accounts due to tight code dependencies. However, the proposed approach along with code dependencies, takes the domain services listed in Table I into consideration and recommends two microservices as shown in FIG. 4B. In case of changes in business requirements, each of these microservices can be changed and deployed independently as they are domain aligned.

**Table I: Account Management Application**

| Domain Services |
|---|
| 1. Account Management Services Group |
| • Retail Account Service |
| • Commercial Account Service |

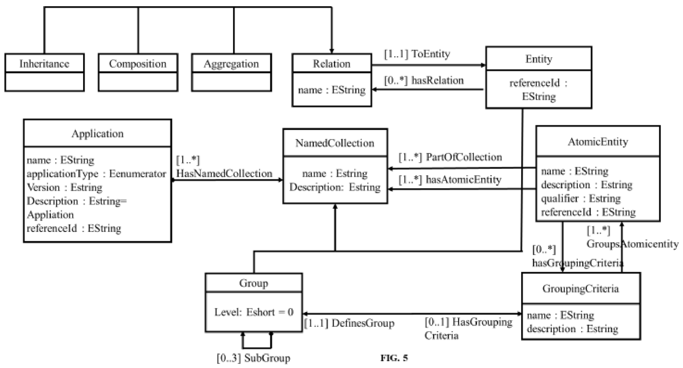

FIG. 5 shows an Architecture Meta Model (AMM) in conjunction with the method for identifying domain aligned microservices in enterprise applications, according to some embodiments of the present disclosure. The details of the architecture meta model (AMM) 218 are explained in the previous sections.

In the present disclosure, there are two different tools, ServiceMate and GEMS (GNN (Graph neural networks) and Embedding based Microservices Identification System) based on the framework of the present disclosure. The component that implements architectural discovery is common to both the tools i.e., ServiceMate and GEMS. The proposed ServiceMate and GEMS tools cater to monolithic JAVA^{®} applications. In the present disclosure, WALA (V 1.6.0) (known in the art) (e.g., refer ʺʺWala," IBM T.J. Watson Research Center. [Online]. Available: https://github.com/wala/WALA) is used as the static code analyzer to extract the plurality of application elements and relationships between them. The T. J. Watson Libraries for Analysis (WALA) provide static analysis capabilities for Java ^{®} bytecode and related languages and for JavaScript. An Eclipse Modelling Framework (EMF) (known in the art) is used in the present disclosure, to create the architecture meta model (AMM) 218 and used EMF provided utilities to instantiate the application architecture model 216. The Eclipse Modeling Framework (EMF) (known in the art) ((e.g., refer ""Eclipse modeling framework," Eclipse Foundation. [Online]. Available: https://www.eclipse.org/modeling/emf')) is an Eclipse-based modeling framework and code generation facility for building tools and other applications based on a structured data model. The plurality of application elements that implement domain alignment and microservice identification differ between these two tools.

ServiceMate: In ServiceMate, the domain alignment module 206 is implemented using manually created domain description map (DDM) 224. Experts may have created such a mapping during event storming exercise. At a high level, this map associates each domain service with the plurality of application elements (classes or programs). For the graph creation step, the weighted graph 228 is adopted with predefined weights from ServiceCutter (known in the art) (e.g., refer "M. Gysel, L. Kolbener, W. Giersche, and O. Zimmermann, "Service ¨ cutter: A systematic approach to service decomposition," in Service-Oriented and Cloud Computing: 5th IFIP WG 2.14 European Conference, ESOCC 2016, Vienna, Austria, September 5-7, 2016, Proceedings 5. Springer, 2016, pp. 185-200."). For the domain mapped plurality of application elements, an extra positive weight is added to the edge in order to embed domain semantics into the graph. Domain alignment is achieved through these extra weights. For grouping of the application elements from the graph, a Louvain clustering algorithm (known in the art) (e.g., refer "V. D. Blondel, J.-L. Guillaume, R. Lambiotte, and E. Lefebvre, "Fast unfolding of communities in large networks," Journal of Statistical Mechanics: Theory and Experiment, vol. 2008, no. 10, p. P10008, Oct. 2008. [Online]. Available: http://dx.doi.org/10.1088/1742-5468/ 2008/10/P10008) is incorporated. It is a community detection based, and which is intended to extract non-overlapping communities from large networks. The Louvain algorithm (known in the art) has been recognized as the best clustering technique for microservices identification task (e.g., refer "T. I. Mohottige, A. Polyvyanyy, R. Buyya, C. Fidge, and A. Barros, "Microservices-based software systems reengineering: State-of-the-art and future directions," arXiv preprint arXiv:2407.13915, 2024."). The identified microservices are visualized and presented to architects for informed decision making.

Graph Neural Network (GNN) and Embedding based Microservices Identification System (GEMS): GEMS tool is another implementation of the framework of the present disclosure. It uses the application architecture model 216 and dependency graph created in the ServiceMate tool. However, GEMS significantly differs in the way domain description map is created and injected into the dependency graph and clustering mechanism. Unlike ServiceMate, the GEMS tool infers the domain summary that elaborates on the domain function to which the particular architectural element (the one or more nodes in the graph) contributes. The idea is to exploit recent advancements in the Graph Neural Network (GNN) based clustering called Deep Modularity networks (DMoN) architecture (known in the art) (e.g., refer "A. Tsitsulin, J. Palowitch, B. Perozzi, and E. Muller, "Graph clustering ¨ with graph neural networks," Journal of Machine Learning Research, vol. 24, no. 127, pp. 1-21, 2023."). This technique has been successfully adopted for microservice identification task (known in the art) (e.g., refer "I. Trabelsi, N. Moha, Y.-G. Gueh' eneuc, and L. Geffard, "Magnet: ' Method-based approach using graph neural network for microservices identification," in 2024 IEEE 21st International Conference on Software Architecture (ICSA). IEEE, 2024, pp. 1-11.").

In the Graph neural network (GNN) (known in the art), each node is an embedding of features whose aggregate structure needs to be learnt. The Graph neural networks (GNNs) are a type of neural network that can learn how to cluster graphs based on their connectivity and attributes. A graph neural network can generate cluster assignments by optimizing a balancing term, without using any explicit clustering objective. GNNs can also perform hierarchical or agglomerative clustering, which is a method of merging smaller clusters into larger ones based on some criterion. In GEMS tool, each node represents an application element. To create a node in GNN, each node in the dependency graph is replaced with an embedding of domain summary of that application element. The edges are weighted edges as in the dependency graph, similar to those in ServiceMate. To generate the domain summary, the summarizing capabilities of the one or more Language Models (LLM) are leveraged by prompting it using the prompt template which is shown below. The prompt contains the context derived from domain service description, Package/Class name, Code comments, Source code (code fragments of AM elements like classes and methods) and a domain summary query. The resulting response to each prompt is coined as domain mapped summary.

A sample prompt (depicted in Table II) with different sections based on the template shown below for a method of a sample application is shown in the text box.

### Prompt template:

(Domain Service Description)
(Package/Class name)
(Code comments)
(Source Code)
(Query)

**Table II: A sample prompt**

| |
|---|
| A Sample prompt |

| **Domain Service Description** |
|---|
| Business models: |
| ... |
| Owner: Represents a person owning one or more pets. |
| Attributes: Name, Address, City, Telephone. |
| A class named: |
| org.springframework.samples.petclinic.owner implements below method |
| ... |
| Suggested Domain Services: |
| ... |
| Owner Management Service: Manages information related to pet owners. |
| ... |
| **Package/Class name** |
| A java class petclinic.owner implements the below method |
| **Code comments** |
| /** |
| * Return the Pet with the given name, or null if none |
| * found for this Owner. |
| * @param name to test |
| * @return a pet if pet name is already in use |
| */ |
| **Source code** |
| Pet getPet(String name) { |
| return getPet(name, false); |
| } |
| Query |
| Use the above stated domain vocabulary and create a short 20-30 words description as to what domain operations the above method is performing, respond with the relevant summary only, do not add any other irrelevant context like:'Here's a 20 words summary ....etc' |

It is to be noted that, unlike one of the existing techniques (e.g., refer "A. Tsitsulin, J. Palowitch, B. Perozzi, and E. Muller, "Graph clustering ¨ with graph neural networks," Journal of Machine Learning Research, vol. 24, no. 127, pp. 1-21, 2023.".), where embedding of technical contents of the methods is considered, an embedding of domain summary of application elements is used.

To highlight the difference between domain summary and the technical summary, Table III shows the sample domain and technical summaries for a few methods. In the present disclosure, sentence embeddings (known in the art) is used to represent domain mapped summary in vector format, which captures the overall semantic meaning of sentences considering the context and semantics. Sentence embeddings of these summaries are computed using a pre-defined Sentence Transformer. To create the GNN, its clustering, and post processing, parts of infrastructure from MAGNET (known in the art) (e.g., refer "I. Trabelsi, N. Moha, Y.-G. Gueh' eneuc, and L. Geffard, "Magnet: ' Method-based approach using graph neural network for microservices identification," in 2024 IEEE 21st International Conference on Software Architecture (ICSA). IEEE, 2024, pp. 1-11.") are reused for identifying the best candidate microservices. The sentence embeddings (known in the art) (e.g., refer "N. Reimers and I. Gurevych, "Sentence-bert: Sentence embeddings using siamese bert-networks," arXiv preprint arXiv:1908.10084, 2019.") is a method that maps sentences to vectors of real numbers. Ideally, these vectors would capture the semantic of a sentence and be highly generic. Such representations could then be used for many downstream applications such as clustering, text mining, or question answering.

**TABLE III: Sample domain summaries for methods**

| **Method** | **Domain Summary** | **Technical Summary** |
|---|---|---|
| **Pet.setType()** | ssigns a categorization of a pet (e.g., Dog, Cat) represented by a PetType to a domesticated animal (Pet). | 'setType()' method sets the 'type' attribute of Pet object, accepting a PetType enum value as parameter input |
| **OwnerController .findOwner()** | Retrieves or creates an Owner entity based on the provided owner ID for pet registration and management purposes. | Method fetches an Owner entity by ID, returning a new instance if ID is null or not found. |
| **Owner.getPet()** | Retrieves a specific Pet associated with this Owner by ID, returning null if not found or id already in use elsewhere. | Retrieve a Pet object from a collection based on its ID, returning null if not found. |

The ServiceMate and GEMS tools are evaluated on a set of benchmarks with the help of architectural metrics. In the present disclosure, four open-sourced JAVA^{®} based monolithic applications are chosen as benchmarks for the evaluation. These applications were chosen as they serve different domains and have varying sizes, representing real world enterprise applications. They have been widely used in earlier tool evaluations (e.g., refer "V. Nitin, S. Asthana, B. Ray, and R. Krishna, "Cargo: ai-guided dependency analysis for migrating monolithic applications to microservices architecture," in Proceedings of the 37th IEEE/ACM International Conference on Automated Software Engineering, 2022, pp. 1-12." and refer "Y. Wang, S. Bornais, and J. Rubin, "Microservice decomposition techniques: An independent tool comparison," in Proceedings of the 39th IEEE/ACM International Conference on Automated Software Engineering (ASE'24),, 2024."). For all these applications, the corresponding domain models are not readily available. Therefore, the Large Language Models (LLMs) are leveraged to generate the domain model. In the present disclosure, GPT-4o is used to generate the domain model. Domain descriptions are created for each application by understanding their business domain and independently querying GPT-4o and validated manually.

**Table IV- Overview of the size of these benchmarks along with the number of domain services**

| **Benchmark** | **#Classes** | **#Methods** | **#LOC** | **#Domain Services** |
|---|---|---|---|---|
| **JForum 3** | 352 | 2376 | 32221 | 14 |
| **Daytrader 7** | 109 | 952 | 14372 | 11 |
| **FXML-POS** | 55 | 426 | 4720 | 8 |
| **PetClinic** | 23 | 84 | 1334 | 4 |

Table IV shows an overview of the size of these benchmarks along with the number of domain services. JForum3 (known in the art) (e.g., refer ""Jforum3." [Online]. Available: https://github.com/rafaelsteil/jforum3") is an online forum application. Daytrader7 (known in the art) (e.g., refer ""daytrader7." [Online]. Available: https://github.com/WASdev/sample. daytrader7") is a stock trading online application built using JavaEE7. FXML-POS (Financial Extensible Markup Language-Point-of-sale) (known in the art) is a retail application for Point-of-sale (POS) with integrated inventory management built using JavaFX (known in the art) (e.g., refer ʺʺFxml-pos." [Online]. Available: https://github.com/sadatrafsanjani/ JavaFX-Point-of-Sales"). PetClinic (known in the art) (e.g., refer ""Petclinic." [Online]. Available: https://github.com/spring-projects/ spring-petclinic ") is a simple pet clinic application developed using Spring framework.

Evaluation Metrics: For evaluation of the identified microservices, the present disclosure uses four quality metrics used to evaluate decomposition from the recent tool comparison study (known in the art).
1) Cyclic (In-)Dependence (CiD) is based on the principle that microservice architecture should not have cyclic dependencies. It measures the portion of partition pairs that do not exhibit cyclic dependency.
2) Code Modularity (CMod) measures the effectiveness of identified microservices in terms of coupling and cohesion between the partitions. It combines coupling and cohesion into a single score, reflecting the structural modularity of the decomposition. The decomposition with higher cohesion and lower coupling is desirable. Coupling captures how multiple parts of the application depend on each other. It is computed by the number of edges coming into a cluster. Overall coupling is calculated by taking a sum of coupling across all clusters and is divided by total number of edges in the graph. Cohesion captures the elements that changed together. Cohesion for each cluster is computed as (internal edges) / (internal edges + external edges). The overall cohesion is calculated as a means of cohesion across all clusters.
3) Team - Contributors (TC) is used to assess Team Independence principle. It evaluates the frequency with which elements historically modified by the same developer are allocated to the same partition.
4) Lifecycle - Commits (LC) assesses how often elements modified together in the same commit are placed in the same partition. This metric evaluates the Lifecycle Independence principle, suggesting that entities committed together follow a similar development lifecycle and should be part of the same service.

In addition to these metrics, the number of identified microservices are computed as well as the minimum, maximum, and mean sizes of the partitions. Further, the coverage of the monolithic application is determined, which represents the proportion of methods in the monolithic source code that were present in identified microservices. Furthermore, the identified microservices qualitatively are also evaluated, assessing the real world applicability of identified microservices in terms of domain alignment.

Evaluation Setup: The two tools ServiceMate and GEMS are evaluated and compared with two state-of-the-art (SOTA) microservices identification techniques, CARGO (known in the art) (e.g., refer "V. Nitin, S. Asthana, B. Ray, and R. Krishna, "Cargo: ai-guided dependency analysis for migrating monolithic applications to microservices architecture," in Proceedings of the 37th IEEE/ACM International Conference on Automated Software Engineering, 2022, pp. 1-12") and MAGNET (known in the art). The CARGO (known in the art) is an un- supervised /semi-supervised partition refinement technique that uses a context- sensitive and flow-sensitive system dependency graph of the monolithic application to refine and thereby enrich the partitioning quality of the current state-of-the-art algorithms. The MAGNET (known in the art) is a fully automated microservice identification approach, based on graph neural networks (GNNs). The MAGNET integrates the GNN model with a fine-grained method-based graph enriched with semantic and static features of the system. The MAGNET enables accurate microservices identification while simultaneously promoting microservice cohesion and reducing microservice coupling.

For evaluation purpose, ServiceMate tool is executed in two different modes, ServiceMate and ServiceMate-. Both modes differ in their input requirements. While ServiceMate takes the domain description map 224 along with the application architecture model 216 as input, ServiceMate- takes only application model as input without domain alignment. ServiceMate and ServiceMate- use static analysis for architectural discovery and different graph clustering methods for partitioning.

**TABLE V: Sizes and coverage of identified microservices**

| Benchmark | Approach | Coverage | Partition Metrics | | | |
|---|---|---|---|---|---|---|
| JForum 3 | CAR | 38% | 174 | 3.6 | 69 | 1 |
| | MAG | 79% | 70 | 18.4 | **513** | 1 |
| | SM | 82% | **26** | 51.4 | 370 | 1 |
| | SMDS | 82% | 53 | 25.2 | 218 | 1 |
| | GEMS | 82% | 147 | 9.1 | 19 | 2 |
| Daytrader 7 | CAR | 39% | 72 | 5 | 42 | 1 |
| | MAG | 63% | 36 | 16.1 | 48 | 1 |
| | SM | 85% | **27** | 29.1 | **169** | 1 |
| | SMDS | 85% | 72 | 10.6 | 107 | 1 |
| | GEMS | 83% | 51 | 15 | 33 | 2 |
| FXML-POS | CAR | 18% | 15 | 4.9 | 39 | 1 |
| | MAG | 79% | 17 | 21.9 | **90** | 1 |
| | SM | 84% | **8** | 47 | 64 | 29 |
| | SMDS | 84% | 25 | 15.4 | 39 | 4 |
| | GEMS | 84% | 26 | 14.7 | 19 | 11 |
| PetClinic | CAR | 21% | 10 | 2.3 | 4 | 1 |
| | MAG | 69% | 14 | 5.5 | 14 | 1 |
| | SM | 87% | 7 | 13.9 | 27 | 2 |
| | SMDS | 87% | 7 | 13.7 | **40** | 1 |
| | GEMS | 87% | 11 | 5.7 | 9 | 4 |

Results: Table V shows partition size statistics and coverage for ServiceMate and GEMS approach and their comparison with SOTA approaches. SMDS and SM represent ServiceMate and ServiceMate-.

Coverage is an indicator of the correctness of architecture recovery. In general, the coverage for GEMS, ServiceMate- (SM), and ServiceMate (SMDS) is higher when compared to MAG (MAGNET) and CAR (CARGO) tools (known in the art). The analysis of Partition size indicates that SM consistently identified the minimum number of services for all four benchmarks and SMDS showed similar performance to SM for one benchmark. Notably, CAR displayed a low coverage rate and yielded higher partition numbers across all benchmarks. MAG has suggested the largest partitions in the case of JForum3 and POS, SM suggested largest partition in case of Daytrader7 and SMDS suggested largest partition in case of PetClinic with higher average number of elements. Considering the completeness of CAR, the partition sizes for largest partition across all benchmarks are higher. This shows that all techniques except GEMS, struggle with the problem of suggesting god partitions.

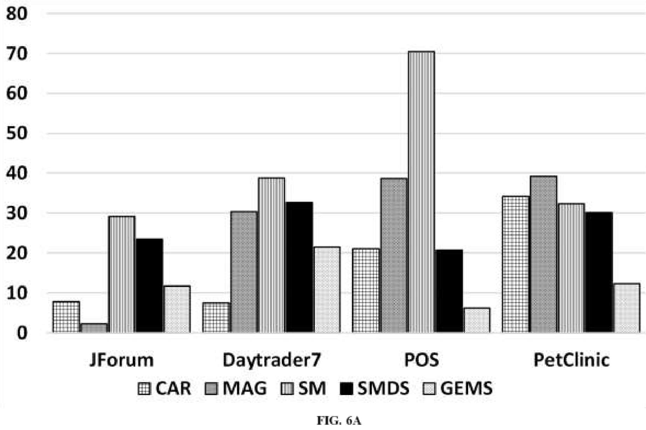

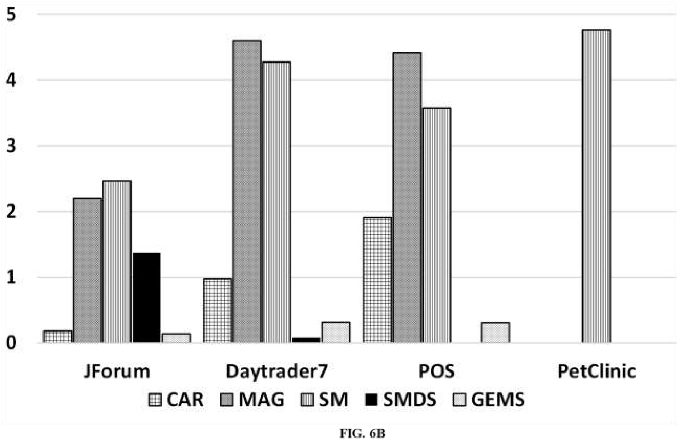

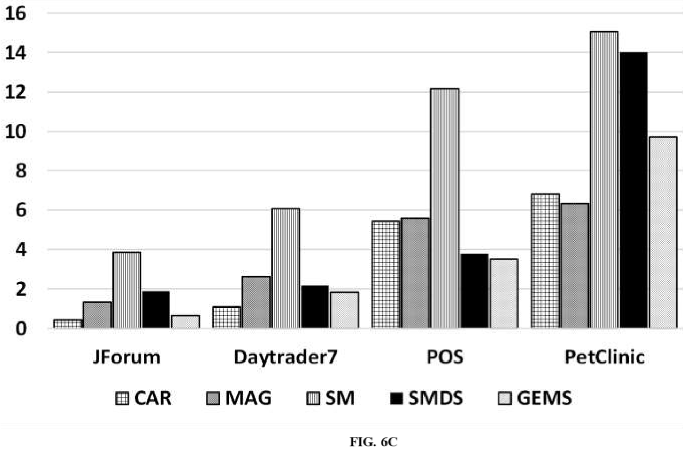

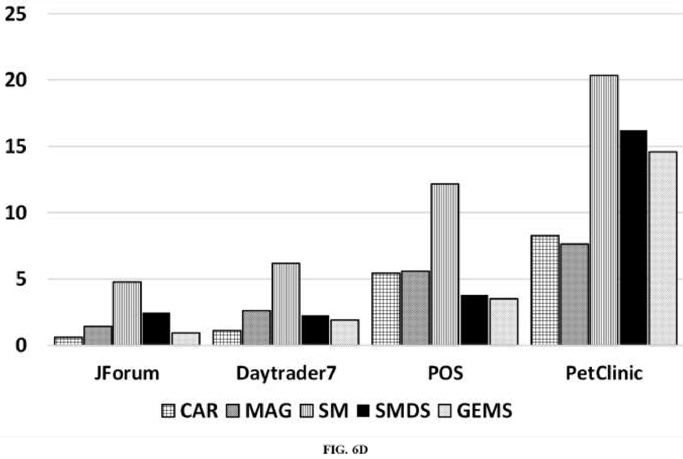

FIGS. 6A through 6D illustrates quality metrics for the benchmark applications including a Cargo, a MAGNET, a ServiceMate and a GNN (Graph Neural Network) based tool in conjunction with the method for identifying domain aligned microservices in enterprise applications, according to some embodiments of the present disclosure.

A higher value of CMod is a desirable decomposition modularity metric. FIG. 6A shows that except for PetClinic, where MAG is performing better, SM outperforms other tools for all other benchmarks, achieving a maximum value of approximately 70% in the case of POS. In cases of SM for Daytrader and SMDS for PetClinic, as there is a presence of god partition, it could be the reason of yielding the high modularity. This suggests that the CMod metric can be sensitive to the existence of large, cohesive partitions.

The Cyclic (In-)Dependence (CiD) captures the portion of pair of partitions that do not have cyclic dependency. In this case, MAG outperforms SM for applications POS and Daytrader7, while SM exhibits higher cyclic independence for other benchmark systems. In contrast to other benchmarks, the PetClinic application exhibits very high cyclic dependency in its decomposition. This phenomenon is observed across multiple approaches: CAR, MAG, SMDS, and GEMS. The monolithic structure of the PetClinic application is a contributing factor to this unique characteristic. This needs deeper investigation to understand the underlying reasons.

TC (Team - Contributors) and LC (Lifecycle - Commits) addressing the Team Independence and Lifecycle Independence principle, follow the same trend with SM being the only tool dominating all other tools. Notably, SM achieves the maximum value among all tools for every benchmark.

**TABLE VI: MAGNET vs GEMS**

| Benchmark | Tool | CHM | CHD | SMQ | CMQ |
|---|---|---|---|---|---|
| JForum 3 | MAG | 0.62 | 0.49 | 0.04 | - 0.0003 |
| | GEMS | 0.176 | 0.602 | 0.004 | - 8.859 |
| Daytrader 7 | MAG | 0.438 | 0.66 | 0.03 | - 0.0007 |
| | GEMS | 0.160 | 0.726 | 0.0048 | - 0.0001 |
| FXML-POS | MAG | 0.60 | 0.57 | 0.02 | - 0.0009 |
| | GEMS | 0.27 | 0.61 | 0.001 | - 0.0001 |
| PetClinic | MAG | 0.51 | 0.59 | 0.06 | - 0.0002 |
| | GEMS | 0.52 | 0.674 | 0 | 0 |

MAGNET has calculated a few metrics to assess the quality of their decomposition. As GEMS and MAGNET tools work on the same architecture, the same metrics are calculated for both GEMS and MAGNET tools in order compare them. These metrics are discussed along with the results obtained for GEMS and MAGNET as shown in Table VI. The precise definitions of these metrics can be found in existing works (e.g., refer "W. Jin, T. Liu, Y. Cai, R. Kazman, R. Mo, and Q. Zheng, "Service candidate identification from monolithic systems based on execution traces," IEEE Transactions on Software Engineering, vol. 47, no. 5, pp. 987-1007, 2019." and refer "D. Athanasopoulos, A. V. Zarras, G. Miskos, V. Issarny, and P. Vassiliadis, "Cohesion-driven decomposition of service interfaces without access to source code," IEEE Transactions on Services Computing, vol. 8, no. 4, pp. 550-562, 2014.").
1. Cohesion at Message Level (CHM) evaluates the cohesion of the interfaces exposed by a microservice at the message level. This metric specifically targets methods that are called from outside the microservice, beyond its internal boundaries. The analysis reveals that MAGNET outperforms GEMS over all four benchmarks. This indicates that MAGNET is able to better preserve the cohesion of interfaces published by microservices at the message level.
2. Cohesion at Domain level (CHD) assesses the cohesion of the interfaces exposed by a microservice at the domain level, taking into account methods that are invoked from outside the service. Rather than focusing only on the message, this metric uses all domain terms contained in the method signature. Results show that GEMS has consistently outperformed MAGNET over all four benchmarks. This suggests that the domain alignment feature of GEMS provides a significant advantage in preserving interface cohesion at the domain level. Notably, this metric is calculated using method signatures alone, implying that further improvement in score of GEMS may be possible with richer domain knowledge incorporated into its calculation logic.
3. Structural Modularity Quality (SMQ) measures the structural dimension of modularity, which is derived from two core metrics: coupling and cohesion. Results suggest that MAGNET outperforms in the case of three out of four benchmarks while GEMS outperforms in the case of PetClinic.
4. Conceptual Modularity Quality (CMQ) measures the quality of modularity from a Domain perspective, based on the underlying metrics of coupling and cohesion. In three out of four benchmarks, GEMS outperforms MAGNET, while it noticeably under performs in case of JForum with high difference in metric values.

GEMS outperforms domain-based metrics, whereas MAGNET excels in structural relationship-based metrics. This discrepancy may be attributed to MAGNET's lower relative coverage. Moreover, structural metrics are calculated based on method call graphs alone, whereas GEMS utilizes relation rich graphs.

Significant challenges are faced in computing precision and recall metrics occurred due to the unavailability of reliable ground truths for all four benchmarks. While MAGNET attempted to generate ground truths for three benchmarks, their accuracy fell short of industry standards. Additionally, partition-to-partition comparisons, essential for these metrics, were hampered by overlapping but non-matching partitions elements. As a result, precision and recall metrics could not be computed reliably, underscoring limitations caused by unreliable ground truths and difficulty in partition-to-partition matching.

When the evaluation was observed collectively, except GEMS, other tools struggle with the problem of identifying god partitions. MAG successfully validates the cyclic independence principle, SM performs better for adhering to the Structural modularity, Team Independence principle and Lifecycle Independence principle. CAR fails to achieve any of these with respect to other tools. Comparing MAG and GEMS, we find that GEMS excels in providing domain alignment to identify microservices.

Apart from metric-based evaluation, the candidate microservices are manually examined to identify the gaps between candidates and microservices designed in practice. To validate the single responsibility principle for each microservice where a microservice should serve a single domain entity, domain entities for each of the benchmarks are identified and did analysis of microservices identified by each of the tools. In the case of JForum, all tools failed to identify microservices serving a single domain entity. Though, GEMS suggested microservices are better domain aligned. In case of Petclinic java application, MAG and GEMS performed better, but their partitions still served multiple domain entities in some cases. In the case of Daytrader, GEMS produced the best results, with no partition serving multiple domain entities. Multiple partitions serve single domain entity which can be merged. In case of FXML-POS, CAR had a god cluster that spanned all domain entities, while MAG had many partitions. GEMS, SM, and SMDS performed well in terms of distribution and domain alignment, where no traces were found for the partitions serving multiple domain entities.

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the present disclosure or if they include equivalent elements with insubstantial differences from the literal language of the embodiments described herein.

Existing microservices identification techniques focused on clustering the cohesive components of the applications, ignoring their alignment to the business domain that they service. The present disclosure implements a framework to identify domain-aligned microservices from legacy enterprise applications and developed two tools, ServiceMate and GEMS. ServiceMate uses dependency based analysis and uses manually created mapping of domain and application elements to provide domain alignment. ServiceMate then uses clustering algorithm to partition the graph to identify microservices. GEMS leverages domain based summary of the architectural elements which is incorporated into a relation-rich graph using sentence embeddings. GEMS uses GNN based clustering and metric-driven evaluation to identify optimal set of microservices.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300), comprising:
receiving (302), via one or more hardware processors, a plurality of inputs specific to an enterprise application from an application repository;
analyzing (304), via the one or more hardware processors, the received plurality of inputs using a static source code analyzer;
generating (306), via the one or more hardware processors, a plurality of outputs based on the analysis;
creating (308), via the one or more hardware processors, a plurality of application elements and one or more associated relations of different types between the plurality of application elements using the generated plurality of outputs;
filtering (310), via the one or more hardware processors, the created plurality of application elements and the associated relations of different types between the plurality of application elements to obtain a filtered set of application elements and the associated relations of different types between the set of application elements;
enriching (312), via the one or more hardware processors, the filtered set of application elements and the associated relations of different types between the set of application elements using the received plurality of inputs;
creating (314), via the one or more hardware processors, an application architecture model using (i) the enriched set of application elements and the associated relations of different types between the enriched set of application elements, and (ii) a pre-created architecture meta model;
creating (316), via the one or more hardware processors, a domain description map to establish a relationship between a domain model and the application architecture model using the following steps:
(i) creating one or more program summaries using the received plurality of inputs specific to the enterprise application, by prompting one or more Large Language Models (LLM) with the domain model as a context;
(ii) creating a vector form of a program representation associated with each of the corresponding created one or more program summaries;
(iii) creating a vector form of a domain model representation associated with each of one or more inputs from the domain model; and
(iv) creating the domain description map by matching the vector form of the program representation and the vector form of the domain model representation using one or more pre-defined similarity methods;
creating (318), via the one or more hardware processors, a weighted graph using the application architecture model and the domain description map, wherein one or more nodes comprised in the weighted graph represent one or more atomic entities comprised in the application architecture model represented by the created vector form of the domain model representation obtained by looking into the domain description map, and wherein one or more edges comprised in the weighted graph represent a dependency relationship among the one or more atomic entities, and weight of each edge is computed using a pre-defined calculation based on a relationship type;
grouping (320), via the one or more hardware processors, by an aggregator, one or more communities specific to the created weighted graph using one or more pre-defined clustering techniques;
evaluating (322), via the one or more hardware processors, the grouped one or more communities using a set of pre-defined one or more architectural metrics;
identifying (324), via the one or more hardware processors, the evaluated one or more communities as one or more candidate microservices based on the evaluation; and
generating (326), via the one or more hardware processors, one or more names for each of the identified one or more candidate microservices by prompting the one or more Large Language Models (LLM) with the one or more atomic entities of the identified one or more candidate microservices as a context.

2. The processor implemented method as claimed in claim 1, wherein the plurality of inputs comprises at least one of a source code, a change history, one or more configuration files, one or more logs and one or more deployment files.

3. The processor implemented method as claimed in claim 1, wherein the plurality of outputs comprises at least one of a type hierarchy, an abstract syntax tree and a call graph.

4. The processor implemented method as claimed in claim 1, wherein the plurality of application elements comprises at least one of one or more classes or one or more programs with associated one or more attributes and one or more methods.

5. The processor implemented method as claimed in claim 1, wherein the pre-created architecture meta model comprises an application, a Named Collection, one or more entities, the one or more atomic entities, a group and a relation.

6. The processor implemented method as claimed in claim 5, wherein the relation comprises at least one of the relations between the application and the Named Collection or between the application and another application or between the Named Collection and another Named Collection.

7. The processor implemented method as claimed in claim 1, wherein the one or more inputs of the domain model comprises one or more domain elements including at least one of one or more domain entities or one or more concepts or one or more terms or one or more facts or one or more relations, a service description, one or more service operations, and one or more use cases.

8. A system (100), comprising:
a memory (104) storing instructions;
one or more communication interfaces (112); and
one or more hardware processors (102) coupled to the memory (104) via the one or more communication interfaces (112), wherein the one or more hardware processors (102) are configured by the instructions to:
receive a plurality of inputs specific to an enterprise application from an application repository;
analyze the received plurality of inputs using a static source code analyzer;
generate a plurality of outputs based on the analysis;
create a plurality of application elements and one or more associated relations of different types between the plurality of application elements using the generated plurality of outputs;
filter the created plurality of application elements and the associated relations of different types between the plurality of application elements to obtain a filtered set of application elements and the associated relations of different types between the set of application elements;
enrich the filtered set of application elements and the associated relations of different types between the set of application elements using the received plurality of inputs;
create an application architecture model using (i) the enriched set of application elements and the associated relations of different types between the enriched set of application elements, and (ii) a pre-created architecture meta model;
create a domain description map to establish a relationship between a domain model and the application architecture model using the following steps:
(i) creating one or more program summaries using the received plurality of inputs specific to the enterprise application, by prompting one or more Large Language Models (LLM) with the domain model as a context;
(ii) creating a vector form of a program representation associated with each of the corresponding one or more program summaries;
(iii) creating a vector form of a domain model representation associated with each of one or more inputs from the domain model; and
(iv) creating the domain description map by matching the vector form of the program representation and the vector form of the domain model representation using one or more pre-defined similarity methods;
create a weighted graph using the application architecture model and the domain description map, wherein one or more nodes comprised in the weighted graph represent one or more atomic entities comprised in the application architecture model represented by the created vector form of the domain model representation obtained by looking into the domain description map, and wherein one or more edges comprised in the weighted graph represent a dependency relationship among the one or more atomic entities, and weight of each edge is computed using a pre-defined calculation based on a relationship type;
group by an aggregator, one or more communities specific to the created weighted graph using one or more pre-defined clustering techniques;
evaluate the grouped one or more communities using a set of pre-defined one or more architectural metrics;
identify the evaluated one or more communities as one or more candidate microservices based on the evaluation; and
generate one or more names for each of the identified one or more candidate microservices by prompting the one or more Large Language Models (LLM) with the one or more atomic entities of the identified one or more candidate microservices as a context.

9. The system as claimed in claim 8, wherein the plurality of inputs comprises at least one of a source code, a change history, one or more configuration files, one or more logs and one or more deployment files.

10. The system as claimed in claim 8, wherein the plurality of outputs comprises at least one of a type hierarchy, an abstract syntax tree and a call graph.

11. The system as claimed in claim 8, wherein the plurality of application elements comprises at least one of one or more classes or one or more programs with associated one or more attributes and one or more methods.

12. The system as claimed in claim 8, wherein the pre-created architecture meta model comprises an application, a Named Collection, one or more entities, the one or more atomic entities, a group and a relation.

13. The system as claimed in claim 12, wherein the relation comprises at least one of the relations between the application and the Named Collection or the relation between the application and another application or the relation between the Named Collection and another Named Collection.

14. The system as claimed in claim 8, wherein the one or more inputs of the domain model comprises one or more domain elements including at least one of one or more domain entities or one or more concepts or one or more terms or one or more facts or one or more relations, a service description, one or more service operations, and one or more use cases.

15. One or more non-transitory machine-readable information storage mediums comprising one or more instructions which when executed by one or more hardware processors cause:
receiving a plurality of inputs specific to an enterprise application from an application repository;
analyzing the received plurality of inputs using a static source code analyzer;
generating a plurality of outputs based on the analysis;
creating a plurality of application elements and one or more associated relations of different types between the plurality of application elements using the generated plurality of outputs;
filtering the created plurality of application elements and the associated relations of different types between the plurality of application elements to obtain a filtered set of application elements and the associated relations of different types between the set of application elements;
enriching the filtered set of application elements and the associated relations of different types between the set of application elements using the received plurality of inputs;
creating an application architecture model using (i) the enriched set of application elements and the associated relations of different types between the enriched set of application elements, and (ii) a pre-created architecture meta model;
creating a domain description map to establish a relationship between a domain model and the application architecture model using the following steps:
(i) creating one or more program summaries using the received plurality of inputs specific to the enterprise application, by prompting one or more Large Language Models (LLM) with the domain model as a context;
(ii) creating a vector form of a program representation associated with each of the corresponding created one or more program summaries;
(iii) creating a vector form of a domain model representation associated with each of one or more inputs from the domain model; and
(iv) creating the domain description map by matching the vector form of the program representation and the vector form of the domain model representation using one or more pre-defined similarity methods;
creating a weighted graph using the application architecture model and the domain description map, wherein one or more nodes comprised in the weighted graph represent one or more atomic entities comprised in the application architecture model represented by the created vector form of the domain model representation obtained by looking into the domain description map, and wherein one or more edges comprised in the weighted graph represent a dependency relationship among the one or more atomic entities, and weight of each edge is computed using a pre-defined calculation based on a relationship type;
grouping by an aggregator, one or more communities specific to the created weighted graph using one or more pre-defined clustering techniques;
evaluating the grouped one or more communities using a set of pre-defined one or more architectural metrics;
identifying the evaluated one or more communities as one or more candidate microservices based on the evaluation; and
generating one or more names for each of the identified one or more candidate microservices by prompting the one or more Large Language Models (LLM) with the one or more atomic entities of the identified one or more candidate microservices as a context.
